(19) Europäisches Patentamt
European Patent Office
Office européen des brevets

(11) **EP 4 629 315 A1**

(12) **EUROPEAN PATENT APPLICATION**

(43) Date of publication:
**08.10.2025 Bulletin 2025/41**

(21) Application number: **24216099.2**

(22) Date of filing: **28.11.2024**

(51) International Patent Classification (IPC):
$H01M\ 4/131^{(2010.01)}$    $H01M\ 4/36^{(2006.01)}$
$H01M\ 4/485^{(2010.01)}$    $H01M\ 4/505^{(2010.01)}$
$H01M\ 4/525^{(2010.01)}$    $H01M\ 4/58^{(2010.01)}$
$H01M\ 10/0525^{(2010.01)}$

(52) Cooperative Patent Classification (CPC):
H01M 4/131; H01M 4/366; H01M 4/485;
H01M 4/505; H01M 4/525; H01M 4/5825;
H01M 10/0525; H01M 2004/021; H01M 2004/028

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **02.04.2024 CN 202410396103**
**06.05.2024 PCT/CN2024/091225**

(71) Applicant: **Eve Power Co., Ltd.**
**Jingmen, Hubei 448000 (CN)**

(72) Inventors:
• **HU, Qi**
**Jingmen, Hubei, 448000 (CN)**
• **XU, Xinxin**
**Jingmen, Hubei, 448000 (CN)**
• **WANG, Chao**
**Jingmen, Hubei, 448000 (CN)**
• **ZENG, Hanmin**
**Jingmen, Hubei, 448000 (CN)**
• **HE, Wei**
**Jingmen, Hubei, 448000 (CN)**

(74) Representative: **Berggren Oy**
**P.O. Box 16**
**Eteläinen Rautatiekatu 10A**
**00101 Helsinki (FI)**

(54) **POSITIVE ELECTRODE PLATE AND LITHIUM-ION BATTERY USING POSITIVE ELECTRODE PLATE**

(57) The present disclosure provides a positive electrode plate and a lithium-ion battery using the positive electrode plate. The positive electrode plate includes a current collector and a positive electrode active material layer. The positive electrode active material layer includes a first active material layer and a second active material layer, both of which are provided in a composite manner. The first active material includes a spinel lithium manganese oxide material and a ternary material, and the second active material layer includes a phosphate material; single crystal sizes of the spinel lithium manganese oxide material and the ternary material are $D_1$ and $D_2$, respectively, which meet a condition $D_2 \geq 3.2 * D_1$.

**Description**

TECHNICAL FIELD

The present disclosure relates to the field of lithium-ion battery, and in particular to a positive electrode plate and a lithium-ion battery using the positive electrode plate.

BACKGROUND

Lithium manganese iron phosphate material has better rate capability and low-temperature performance, but has a dual voltage platform, which makes the design of Battery Management System (BMS) more difficult. Therefore, the lithium manganese iron phosphate material is generally mixed with ternary materials for use to smooth the charge-discharge curve and improve the cycling stability, and thereby improving the cycling performance. Some researchers have proposed introducing lithium manganese oxide, which has a lower cost, and can be mixed with lithium manganese iron phosphate due to its higher applied voltage. By using the ternary materials with high energy density, low-cost lithium manganese oxide materials, and long-cycle lithium manganese iron phosphate materials in combination, a battery with long cycle life and low cost can be achieved.

However, in the related technologies, the three materials are generally mixed directly to form a slurry, which is then coated evenly, but due to significant differences in particle size, density, and pH value among the three materials, it is difficult to mix them, leading to a difficult in electrode plate processing. In addition, for the electrode plate obtained by mixing the three materials together, the distribution of the particles is uneven, failing to utilize the advantages of the three materials. There is also a method that the ternary material and the lithium manganese iron phosphate material are prepared as separate coatings and then a composite coating method is adopted. But in this method, a gap filling effect of the lithium manganese iron phosphate on the ternary material cannot be utilized, resulting in a decrease in compacted density; the cost reducing and energy density improving effects of the lithium manganese oxide, which is a simple blended material, cannot be fully achieved. Therefore, there is a need to develop a low cost and high compaction electrode system design that meets the requirements for energy density and cycling performance.

SUMMARY

The present disclosure provides a positive electrode plate and a lithium-ion battery using the positive electrode plate, which can reduce the battery production cost, increase the compacted density of an electrode plate, and improve the volumetric energy density and cycling performance of the battery.

The present disclosure provides a positive electrode plate including a current collector and a positive electrode active material layer coated on at least one side of the current collector; the positive electrode active material layer includes a first active material layer and a second active material layer, both of which are provided in a composite manner; in which, the first active material includes a spinel lithium manganese oxide material and a ternary material; the second active material layer includes a phosphate material; the spinel lithium manganese oxide material includes a lithium manganese oxide single crystal particle, and the ternary material includes a ternary single crystal particle; a primary particle of the spinel lithium manganese oxide material is $D_1$, a primary particle of the ternary material is $D_2$, and a relationship between the spinel lithium manganese oxide material and the ternary material meets a condition $D_2 \geq 3.2*D_1$.

The present disclosure also provides a lithium-ion battery comprising the positive electrode plate described above.

Beneficial Effects

The beneficial effects of the present disclosure are as follows. The positive electrode plate provided in the present disclosure is designed by controlling the morphology of the single crystal of the spinel lithium manganese oxide material, and by limiting a primary particle size of the ternary material and a primary particle size of lithium manganese oxide at the same time. If the size meets a condition $D_2 \geq 3.2*D_1$, the stacked-compacted density of the electrode plate can be optimized, thereby increasing the volumetric energy density of the cell; however, if $D_2 < 3.2*D_1$, the optimal ratio between the ternary material and the spinel lithium manganese oxide material cannot be achieved, and the maximum compacted density cannot be achieved, thereby reducing the volumetric energy density of the cell. At the same time, by utilizing the significantly different pH values of the spinel lithium manganese oxide material (pH 9.4-10.4), the ternary material (pH 10.4-12.0) and the phosphate material (pH 8.3-9.4), the spinel lithium manganese oxide material is mixed with the ternary material for use, when the sizes of both meet the condition $D_2 \geq 3.2*D_1$, it can not only avoid the instability of the slurry obtained by mixing the lithium manganese iron phosphate and the ternary material, but also maintain the weight balancing effect, reduce the cost of the positive electrode system, and reduce the occurrence of interface layering between the phosphate material and the ternary material, thereby improving the cycling performance. Additionally, by introducing the spinel lithium manganese oxide material into the electrode plate, the rate capability of the ternary material can be improved. Therefore, the positive electrode plate provided in the present disclosure has excellent cycling performance, rate capability and low cost.

The lithium-ion battery provided in the present disclosure adopts the positive electrode plate described above, which has excellent cycling performance, rate capability and low cost.

BRIEF DESCRIPTION OF DRAWINGS

FIG. 1 shows a positive electrode plate provided by some embodiments of the present disclosure, in which a first active material layer is provided on a side close to a current collector.
FIG. 2 shows the positive electrode plate provided by some embodiments of the present disclosure, in which a second active material layer is provided on a side close to the current collector.

DETAILED DESCRIPTION OF EXAMPLES

In order to make those skilled in the art better understand the technical solution in the present disclosure, the technical solution in the present disclosure is illustrated clearly and completely in combination with the examples and the drawings of the examples below. Obviously, the described examples are only a part of the examples in the present disclosure, not all of the examples.

Example 1

1. Preparation of a positive electrode plate

(1) Preparation of materials for preparing the positive electrode plate

For preparing the positive electrode plate provided in this example, the optional positive electrode active materials of each active material layer are shown in Table 1. Particularly, $D_3$ of phosphate material $LiMn_{0.6}Fe_{0.4}PO_4$ is 200 nm.

Table 1: Materials for Preparing the Positive Electrode Plate

| Positive Electrode Active Material Layer | Positive Electrode Active Material | |
|---|---|---|
| first active material layer | ternary material | $LiNi_{0.8}Co_{0.1}Mn_{0.1}O_2$ |
| | | $LiNi_{0.8}Co_{0.1}Al_{0.1}O_2$ |
| | spinel lithium manganese oxide material | $LiMn_2O_4$ |
| second active material layer | phosphate material | $LiMn_{0.6}Fe_{0.4}PO_4$ |

A method for preparing the positive electrode plate

The spinel lithium manganese oxide material and the ternary material shown in Table 1 are mixed at a mass ratio of 1:1. Then, an obtained mixed material, conductive carbon black, CNT and PVDF are mixed at a mass ratio of 96:1:1:2. After mixing and stirring these materials evenly using NMP as a solvent, a first active material layer slurry is obtained .

The phosphate material shown in Table 1, the conductive carbon black, CNT and PVDF are mixed in the mass ratio of 96:1:1:2. After mixing and stirring these materials evenly using NMP as the solvent, a second active material layer slurry is obtained.

The first active material layer slurry and the second active material layer slurry are coated on a carbon-coated aluminum foil at the same time, in which, the first active material layer is provided on a side close to an aluminum foil, with a surface density of 40 g/m²; a surface density of the second active material layer is 160 g/m². After drying, cold pressing (with an electrode plate extension rate of 0.5-0.7%) and die-cutting, the positive electrode plate is obtained.

2. Preparation of a negative electrode plate

A slurry prepared using a negative electrode material (graphite), conductive agent (acetylene black), adhesive (CMC and SBR) at a mass ratio of 94:1:2:3 is coated on a copper foil current collector. After vacuum drying, a negative electrode plate is obtained.

3. Assembly of a battery

The positive electrode plate prepared above, a separator (a 14 $\mu$m separator from Semcorp is selected) and the negative electrode plate are stacked in order, with the separator serving as an isolator between the positive electrode plate and the negative electrode plate, and then a cell is obtained by stacking or winding. The cell is provided in an outer packaging shell (such as an aluminum shell or a soft package), after drying, an electrolyte is added (ZP507 type from Sinochem Lantian Co., Ltd. is selected) at a ratio of 5.0 g/Ah. After vacuum packaging, standing, formation, and capacity grading, a secondary battery for testing is obtained.

In this example, the positive electrode active materials selected for preparing the first active material layer and the second active material layer, along with their primary particle sizes, are taken as variables, and different treatment groups and control groups are set up. In particular, in Example 1, the variables for treatment groups 1A-4A and control groups 1A-2A are shown in Table 2. Except for the aforementioned differences, steps for preparing the positive electrode plate and a lithium-ion battery in this example are consistent with the methods described above.

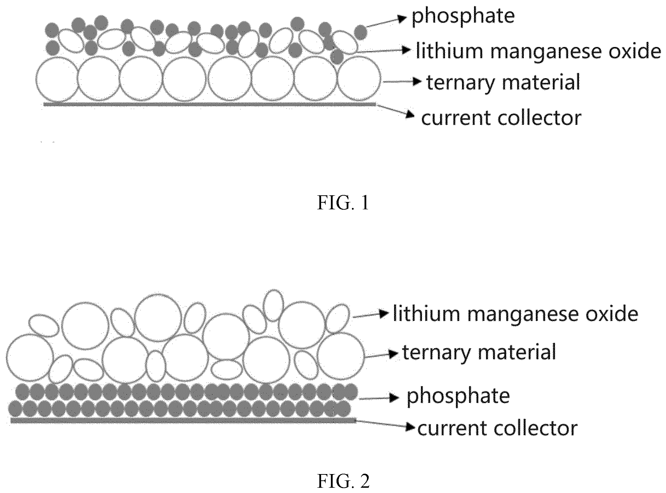

The positive electrode plate prepared from Treatment Group 1A of Example 1 is shown in FIG.1, and the positive electrode plate prepared from Treatment Group 5A of Example 1 is shown in FIG.2

Table 2: Variables for Treatment Groups 1A-4A and Control Groups 1A-2A in Example 1

| Electrode Layer | First Active Material Layer (close to aluminum foil) | | | | Second active Material Layer |
|---|---|---|---|---|---|
| Groups | Positive Electrode Active Material | $D_2$ | Positive Electrode Active Material | $D_1$ | Positive Electrode Active Material |
| Treatment Group 1A | $LiNi_{0.8}Co_{0.1}Mn_{0.1}O_2$ | 3 $\mu$m | $LiMn_2O_4$ | 0.5 $\mu$m | $LiMn_{0.6}Fe_{0.4}PO_4$ |
| Treatment Group 2A | $LiNi_{0.8}Co_{0.1}Mn_{0.1}O_2$ | 5 $\mu$m | $LiMn_2O_4$ | 1.5 $\mu$m | $LiMn_{0.6}Fe_{0.4}PO_4$ |
| Treatment Group 3A | $LiNi_{0.8}Co_{0.1}Mn_{0.1}O_2$ | 6.6 $\mu$m | $LiMn_2O_4$ | 1.5 $\mu$m | $LiMn_{0.6}Fe_{0.4}PO_4$ |
| Treatment Group 4A | $LiNi_{0.8}Co_{0.1}Mn_{0.1}O_2$ | 6.6 $\mu$m | $LiMn_2O_4$ | 2 $\mu$m | $LiMn_{0.6}Fe_{0.4}PO_4$ |
| Control Group 1A | $LiNi_{0.8}Co_{0.1}Mn_{0.1}O_2$ | 1 $\mu$m | $LiMn_2O_4$ | 3 $\mu$m | $LiMn_{0.6}Fe_{0.4}PO_4$ |
| Control Group 2A | $LiNi_{0.8}Co_{0.1}Mn_{0.1}O_2$ | 2 $\mu$m | $LiMn_2O_4$ | 1.5 $\mu$m | $LiMn_{0.6}Fe_{0.4}PO_4$ |

Treatment Group 5A

In this treatment group, the positive electrode plate is prepared according to a formulation provided in Treatment Group 1A of Example 1. A difference between this treatment group and Treatment Group 1A of Example 1 lies in that the second active material layer slurry is coated on a side close to the aluminum foil when preparing the positive electrode plate. Except for the aforementioned differences, the preparation of the lithium-ion battery in this treatment group is strictly consistent with that of Treatment Group 1A in Example 1. Particularly, for the second active material layer close to the aluminum foil, the positive electrode active material used is $LiMn_{0.6}Fe_{0.4}PO_4$ with $D_3$ of 200 nm; for the first active material layer away from the aluminum foil, the positive electrode active materials used are $LiMn_2O_4$ with $D_1$ of 0.5 $\mu$m and $LiNi_{0.8}Co_{0.1}Mn_{0.1}O_2$ with $D_2$ of 3 $\mu$m.

Control Group 3A

In this control group, the positive electrode plate is prepared according to the formulation provided in Treatment Group 1A of Example 1. The difference between this control group and Treatment Group 1A of Example 1 lies in that, when preparing the positive electrode plate, the material used for the first active material layer only is NCM811, and the second active material layer is prepared by mixing a lithium manganese iron phosphate material and a lithium manganese oxide material together. Except for the aforementioned differences, the preparation of the lithium-ion battery in this control group is strictly consistent with that of Treatment Group 1A in Example 1. Particularly, for the first active material layer close to the aluminum foil, the positive electrode active material used is $LiNi_{0.8}Co_{0.1}Mn_{0.1}O_2$ with $D_2$ of 3 $\mu$m; for the second active material layer away from the aluminum foil, the positive electrode active materials used are $LiMn_2O_4$ with $D_1$ of 0.5 $\mu$m and $LiMn_{0.6}Fe_{0.4}PO_4$ with $D_3$ of 200 nm.

Control Group 4A

In this control group, the positive electrode plate is prepared according to the formulation provided in Treatment Group 1A. The Difference between this control group and Treatment Group 1A lies in that, when preparing the positive electrode plate, the material used for the first active material layer is NCM811, and the material used for the second active material layer is lithium manganese iron phosphate. Except for the aforementioned differences, the preparation of the lithium-ion battery in this control group is strictly consistent with that of Treatment Group 1A in Example 1. Particularly, for the first active material layer close to the aluminum foil, the positive electrode active material used is $LiNi_{0.8}Co_{0.1}Mn_{0.1}O_2$ with $D_2$ of 3 $\mu$m; for the second active material layer away from the aluminum foil, the positive electrode active materials used are $LiMn_2O_4$ with $D_1$ of 0.5 $\mu$m and $LiMn_{0.6}Fe_{0.4}PO_4$ of $D_3$ of 200 nm.

Control Group 5A

In this control group, the positive electrode plate is prepared according to the formulation provided in Treatment Group 1A of Example 1. the difference between this control group and Treatment Group 1A lies in that, when preparing the positive electrode plate, the material used for the first active material layer is NCM811, and the material used for the second active material layer is lithium manganese oxide material. Except for the aforementioned differences, the preparation of the lithium-ion battery in this control group is strictly consistent with that of Treatment Group 1A in Example 1. Particularly, for the first active material layer close to the aluminum foil, the positive electrode active material used is $LiNi_{0.8}Co_{0.1}Mn_{0.1}O_2$ with $D_2$ of 3 $\mu$m; for the second active material layer away from the aluminum foil, the positive electrode active material used is $LiMn_2O_4$ with $D_1$ of 0.5 $\mu$m.

Control Group 6A

In this control group, the positive electrode plate is prepared according to the formulation provided in Treatment Group 1A of Example 1. The difference between this control group and Treatment Group 1A of Example 1 lies in that, in this control group, there is only one active material layer obtained by mixing NCM811 and the lithium manganese iron phosphate material together when preparing the positive electrode plate. In particular, a surface density ratio of NCM811 to lithium manganese iron phosphate material is 2:8. Except for the aforementioned differences, the preparation of the lithium-ion battery in this control group is strictly consistent with that of Treatment Group 1A in Example 1. Particularly, for the active material layer, the positive electrode active materials used are $LiNi_{0.8}Co_{0.1}Mn_{0.1}O_2$ with $D_2$ of 3 $\mu$m and $LiMn_{0.6}Fe_{0.4}PO_4$ with $D_3$ of 200 nm.

Control Group 7A

In this control group, the positive electrode plate is prepared according to the formulation provided in Treatment Group 1A of Example 1. The difference between this control group and Treatment Group 1A of Example 1 lies in that, in this control group, there is only one active material layer obtained by mixing NCM811, the lithium manganese iron phosphate and the lithium manganese oxide together when preparing the positive electrode plate. Except for the aforementioned differences, the preparation of the lithium-ion battery in this control group is strictly consistent with that of Treatment Group 1A in Example 1. Particularly, for the active material layer, the positive electrode active materials used are $LiMn_2O_4$ with $D_1$ of 0.5 $\mu$m, $LiNi_{0.8}Co_{0.1}Mn_{0.1}O_2$ with $D_2$ of 3 $\mu$m and $LiMn_{0.6}Fe_{0.4}PO_4$ with $D_3$ of 200 nm. Specifically, steps for preparing the electrode plate in this control group are as follows: the spinel lithium manganese oxide material ($LiMn_2O_4$), the ternary material ($LiNi_{0.8}Co_{0.1}Mn_{0.1}O_2$) and the phosphate material ($LiMn_{0.6}Fe_{0.4}PO_4$) are mixed at a mass ratio of 1:1:1; a mixed positive electrode active material, the conductive carbon black, CNT and PVDF are then mixed at the mass ratio of 96:1:1:2; the positive electrode active material layer slurry is obtained after mixing and stirring these materials evenly using NMP as the solvent; the positive electrode active material layer slurry is then coated on the surface of aluminum foil; and after drying, cold pressing and die-cutting, the positive electrode plate is obtained.

Test Example 1

1. Test Object

The batteries prepared in each treatment group and the control group of Example 1

2. Test Method

Cycling performance at room temperature: at 25°C, the lithium-ion battery is charged at a constant current of 0.5C (nominal capacity) to a voltage of 4.2V, then charged at a constant voltage of 4.2V until a current drops to no more than 0.05C. After a 10min rest, the battery is discharged at a constant current of 1C or 2C until a cutoff voltage reaches 2.5V. The above is one charge-discharge cycle. The lithium-ion batteries are subjected to the charge-discharge cycles according to the above conditions at 25°C respectively, and the number of cycles with a capacity retention of 80% at different discharge rates are recorded. In particular, the capacity retention is calculated according to Equation (1).

Capacity retention of lithium-ion battery after N times cycles (%) = (discharge capacity of Nth cycle / first discharge capacity)$\times$100%

3. Test Results and Analysis

The test results of this test example are shown in Table 3. Particularly, this test example primarily explores an effect of using different spinel lithium manganese oxide materials, ternary materials, phosphate materials, and a setting of the first active material layer and the second active material layer on the prepared positive electrode plate. In Treatment Groups 1A-4A of Example 1, the main focus is on exploring an effect of different $D_1$ and $D_2$, and the ternary material. Among them, the battery prepared in Treatment Group 1A shows excellent rate capability and cycling performance. However, comparing Treatment Group 5A with Treatment Group 1A, two positive electrode active layers are exchanged, yet an electrical performance of the lithium-ion battery prepared in Treatment Group 5A remains at a good level.

In Control Groups 1A-2A, the condition $D_2 \geq 3.2*D_1$ is not met, leading to a decrease in the cycling performance of the batteries prepared in these groups.

In Control Group 3A, the first active material layer is the ternary material, the second active material layer is a mixture of the lithium manganese iron phosphate material and the lithium manganese oxide material, leading to a significant decrease in the rate capability and the cycling performance of the battery prepared in this group. Compared with Control Group 3A, in Control Group 4A, the second active material layer is the electrode plate prepared using only lithium manganese iron phosphate, leading to a significant decrease in the cycling performance of the battery prepared in this group.

In Control Group 5A, both of the ternary material and the lithium manganese oxide material are used for coating to prepare the electrode plate, leading to a significantly decrease in the rate capability and the cycling performance of the battery prepared in this group.

In Control Group 6A, the ternary material and the phosphate material are mixed for coating to prepare the electrode plate, leading to a significantly decrease in the rate capability of the battery prepared in this group. This may be because a dispersibility of the slurry obtained by mixing the phosphate material with lithium manganese oxide is not good as a dispersibility of the slurry obtained by mixing the ternary material with the lithium manganese oxide material.

In Control Group 7A, the positive electrode plate is prepared by mixing the spinel lithium manganese oxide material, the ternary material and the phosphate material together and then coating the resulting slurry. However, the positive electrode active slurry prepared by this method is difficult to mix evenly, leading to a significant decrease in the rate capability and cycling performance of the lithium-ion battery prepared in this group.

Table 3: Test Results of Test Example 1

| Groups | Compacted Density g/cm$^3$ | Rate Capability and Cycling Performance / Number of Cycles | |
|---|---|---|---|
| | | 1C | 2C |
| Treatment Group 1A | 2.492 | 1913 | 1721 |
| Treatment Group 2A | 2.488 | 1794 | 1553 |
| Treatment Group 3A | 2.480 | 1854 | 1547 |
| Treatment Group 4A | 2.479 | 1810 | 1490 |
| Treatment Group 5A | 2.492 | 1902 | 1530 |
| Control Group 1A | 2.399 | 1589 | 1410 |

(continued)

| Groups | Compacted Density g/cm$^3$ | Rate Capability and Cycling Performance / Number of Cycles | |
|---|---|---|---|
| | | 1C | 2C |
| Control Group 2A | 2.425 | 1705 | 1545 |
| Control Group 3A | 2.459 | 1689 | 1493 |
| Control Group 4A | 2.410 | 1739 | 1387 |
| Control Group 5A | 2.988 | 1118 | 1043 |
| Control Group 6A | 2.520 | 1605 | 1242 |
| Control Group 7A | 2.470 | 1514 | 1187 |

Example 2

In this example, Treatment Groups 1B-5B are set up based on Treatment Group 2A in Example 1. Additionally, for Treatment Groups 1B-5B in Example 2, $m_1$ and $\rho_1$ of the first active material layer, and $m_2$ and $\rho_2$ of the second active material layer are taken as variables. Except for the aforementioned differences, the steps for preparing the positive electrode plate and lithium-ion battery of Treatment Groups 1B-5B in Example 2 are strictly consistent with those of Treatment Groups 2A in Example 1.

Table 4: Variables for Treatment Groups 1A-2A in Example 2

| Groups | $m_1$ | $\rho_1$ (g/cm$^3$) | $m_2$ | $\rho_2$ (g/cm$^3$) | $\rho = 1/(\dfrac{m_1}{\rho_1} + \dfrac{m_2}{\rho_2})$ |
|---|---|---|---|---|---|
| Treatment Group 1B | 0.1 | 2.6 | 0.9 | 2 | 2.05 |
| Treatment Group 2B | 0.5 | 2.9 | 0.5 | 2.5 | 2.69 |
| Treatment Group 3B | 0.5 | 3.8 | 0.5 | 1.9 | 2.53 |
| Treatment Group 4B | 0.7 | 3.2 | 0.3 | 2.3 | 2.86 |
| Treatment Group 5B | 0.9 | 3.2 | 0.1 | 2.3 | 3.08 |

Test example 2

1. Test Object

The batteries prepared in each treatment group of Example 2.

2. Test Method

This example is conducted referring to Test Example 1.

3. Test results and analysis

The test results of this test example are shown in Table 5. Particularly, this test example primarily explores an effect of compacted density and mass fraction of the first active material layer and the second active material layer on the prepared positive electrode plate. Through testing data, it can be found that inTreatment Groups 1B to 5B, by adjusting the mass fraction and compact density of the first active material layer and the second active material layer, the compacted density of the positive electrode plate can be further optimized, thereby increasing the volumetric energy density and cycling performance of the positive electrode.

Table 5 Test Results of Test Example 2

| Groups | Compacted Density g/cm$^3$ | Rate Capability and Cycling Performance / Number of Cycles | |
|---|---|---|---|
| | | 1C | 2C |
| Treatment Group 1B | 2.05 | 1912 | 1221 |
| Treatment Group 2B | 2.69 | 1694 | 1310 |
| Treatment Group 3B | 2.53 | 1642 | 1363 |
| Treatment Group 4B | 2.86 | 1545 | 1403 |
| Treatment Group 5B | 3.08 | 1510 | 1462 |

**Claims**

1. A positive electrode plate **characterized by** comprising a current collector and a positive electrode active material layer coated on at least one side of the current collector;

   the positive electrode active material layer comprises a first active material layer and a second active material layer, both of which are provided in a composite manner, wherein, the first active material comprises a spinel lithium manganese oxide material and a ternary material; the second active material layer comprises a phosphate material;
   the spinel lithium manganese oxide material comprises lithium manganese oxide single crystal particles, and the ternary material comprises ternary single crystal particles; a primary particle size of the spinel lithium manganese oxide material is $D_1$, a primary particle size of the ternary material is $D_2$, and the spinel lithium manganese oxide material and the ternary material meet a condition $D_2 \geq 3.2*D_1$.

2. The positive electrode plate according to claim 1, **characterized by** comprising any one or a combination of two of following:

   the primary particle size of the spinel lithium manganese oxide material $D_1$ is 0.5-2 $\mu$m;
   the ternary material comprises at least one of $LiNi_{0.8}Co_{0.1}Mn_{0.1}O_2$ and $LiNi_{0.8}Co_{0.1}Al_{0.1}O_2$; the spinel lithium manganese oxide material comprises $LiMn_2O_4$; and the phosphate material comprises $LiMn_{0.6}Fe_{0.4}PO_4$.

3. The positive electrode plate according to claim 2, **characterized in that** the ternary material is $LiNi_{0.8}Co_{0.1}Mn_{0.1}O_2$ with $D_2$ of 3 $\mu$m, and the spinel lithium manganese oxide material is $LiMn_2O_4$ with $D_1$ of 0.5 $\mu$m.

4. The positive electrode plate according to any one of claims 1 to 3, **characterized in that** a primary particle size of the phosphate material is $D_3$, and $D_3$ is 100 nm-600 nm.

5. The positive electrode plate according to claim 4, **characterized in that** the phosphate material is $LiMn_{0.6}Fe_{0.4}PO_4$ with $D_3$ of 200 nm.

6. The positive electrode plate according to any one of claims 1 to 5, **characterized in that**, in the positive electrode active material layer, a mass fraction of the first active material layer is $m_1$, and a compacted density of the first active material layer is $\rho_1$; a mass fraction of the second active material layer is $m_2$, and a compacted density of the second active material layer is $\rho_2$; the positive electrode plate meets the following relationships:
   $D_2 \geq 3.2*D_1$; $m_1:m_2$=0.1-10:1, and $m_1 + m_2 = 1$.

7. The positive electrode plate according to claim 6, **characterized by** comprising any one or a combination of two of following:

   in the first active material layer, a mass ratio of the spinel lithium manganese oxide material to ternary material is 0.1-5:1;
   the compacted density $\rho_1$ of the first active material layer is 2.9-3.8 g/cm$^3$, and/or the compacted density $\rho_2$ of the second active material layer is 2.0-2.5 g/cm$^3$.

8. The positive electrode plate according to claim 7, **characterized in that** the mass fraction $m_1$ of the first active material layer is 0.9, and the compacted density $\rho_1$ of the first active material layer is 3.2 $g/cm^3$; the mass fraction $m_2$ of the second active material layer is 0.1, and the compacted density $\rho_2$ of the second active material layer is 2.3 $g/cm^3$.

9. The positive electrode plate according to claim 7 or 8, **characterized in that** a compacted density $\rho$ of the positive electrode plate is 2.3-3.6 $g/cm^3$.

10. The positive electrode plate according to claim 6 or 7, **characterized in that** a ratio of a surface density of the first active material layer to a surface density of the second active material layer is 5-60:50-200.

11. The positive electrode plate according to claim 10, **characterized in that** the surface density of the first active material layer is 5-60 $g/m^2$.

12. The positive electrode plate according to claim 11, **characterized in that** the surface density of the first active material layer is 40 $g/m^2$, and the surface density of the second active material layer is 160 $g/m^2$.

13. The positive electrode plate according to any one of claims 1-12, **characterized in that** the first active material layer is coated on a side close to the current collector, and the second active material layer is coated on a side of the first active material layer away from the current collector.

14. The positive electrode plate according to any one of claims 1-12, **characterized in that** the second active material layer is coated on a side close to the current collector, and the first active material layer is coated on a side of the second active material layer away from the current collector.

15. A lithium-ion battery **characterized by** comprising the positive electrode plate as described in any one of claims 1-14.

phosphate
lithium manganese oxide
ternary material
current collector

FIG. 1

lithium manganese oxide
ternary material
phosphate
current collector

FIG. 2

Europäisches Patentamt

European Patent Office

Office européen des brevets

## EUROPEAN SEARCH REPORT

**Application Number**

EP 24 21 6099

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 105 470 496 A (WANXIANG A123 SYSTEMS CO LTD; WANXIANG GROUP CO LTD) 6 April 2016 (2016-04-06) * example 3 * | 1-15 | INV. H01M4/131 H01M4/36 H01M4/485 H01M4/505 |
| A | CN 113 594 412 A (PHYLION BATTERY CO LTD) 2 November 2021 (2021-11-02) * claims 1-8 * | 1-15 | H01M4/525 H01M4/58 H01M10/0525 |

**TECHNICAL FIELDS SEARCHED (IPC)**

H01M

The present search report has been drawn up for all claims

| Place of search | Date of completion of the search | Examiner |
|---|---|---|
| Munich | 7 May 2025 | Lavorenti, Marek |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 21 6099

This annex lists the patent family members relating to the patent documents cited in the above-mentioned European search report.
The members are as contained in the European Patent Office EDP file on
The European Patent Office is in no way liable for these particulars which are merely given for the purpose of information.

07-05-2025

| Patent document cited in search report | | Publication date | Patent family member(s) | Publication date |
|---|---|---|---|---|
| CN 105470496 | A | 06-04-2016 | NONE | |
| CN 113594412 | A | 02-11-2021 | NONE | |

EPO FORM P0459

For more details about this annex : see Official Journal of the European Patent Office, No. 12/82